Europäisches Patentamt

European Patent Office

Office européen des brevets

(19)

(11) Numéro de publication : **0 097 082**
**B1**

(12) **FASCICULE DE BREVET EUROPÉEN**

(45) Date de publication du fascicule du brevet :
10.09.86

(21) Numéro de dépôt : **83401131.4**

(22) Date de dépôt : **03.06.83**

(51) Int. Cl.⁴ : **C 02 F 1/40, E 02 B 15/04,
B 01 D 17/02**

(54) **Dispositif de récupération sélective et continue des hydrocarbures présents sous forme de nappe à la surface d'un milieu aqueux.**

(30) Priorité : **11.06.82 FR 8210231**

(43) Date de publication de la demande :
**28.12.83 Bulletin 83/52**

(45) Mention de la délivrance du brevet :
**10.09.86 Bulletin 86/37**

(84) Etats contractants désignés :
**BE DE GB IT NL**

(56) Documents cités :
**EP-A- 0 087 548
CA-A-   959 423
FR-A- 2 376 082
US-A- 3 536 199
US-A- 3 693 805
US-A- 3 744 257
US-A- 3 992 292**

(73) Titulaire : **ELF FRANCE Société Anonyme dite:
137, Rue de l'Université
F-75340 Paris Cedex 07 (FR)**

(72) Inventeur : **Delons, Luc
42 Avenue Bié Moulié
F-64000 Pau (FR)**
Inventeur : **Chaumont, Roger
Longes Dizimieux
F-69420 Condrieu (FR)**

EP 0 097 082 B1

Jouve, 18, rue St-Denis, 75001 Paris, France

## Description

La présente invention concerne un dispositif permettant la récupération sélective et continue des hydrocarbures présents sous forme de nappe à la surface d'un milieu aqueux.

La récupération des hydrocarbures à la surface des nappes d'eau, en particulier dans les bassins de décantation naturels ou artificiels nécessite l'utilisation de dispositifs récupérateurs qui peuvent être classés en deux grandes catégories. La première concerne les écrémeurs superficiels qui sont des appareils qui recueillent une certaine couche de liquide en surface, sans faire de distinction entre les hydrocarbures et l'eau. Ils créent un courant superficiel qui permet d'attirer la nappe à distance mais présentent l'inconvénient de fournir un mélange d'eau et d'hydrocarbures. Il est donc nécessaire, pour obtenir une séparation complète, de disposer en aval de ces dispositifs d'un système de séparation alimenté par une pompe dont l'utilisation présente le risque de créer une émulsion du mélange ce qui nécessite soit une autre étape de décantation, soit l'utilisation de dispositifs surdimensionnés permettant de séparer les hydrocarbures présents sous forme d'émulsion dans l'eau. De tels dispositifs sont par exemple connus de l'homme de l'art sous le nom de « goulotte mobile » et décrits dans le chapitre 6, Volume : « Liquid Wastes » du « Manual on disposal of refinery Wastes », édité par L'american petroleum institute — Copyright 1969.

La deuxième catégorie de récupérateurs concerne les récupérateurs sélectifs, c'est-à-dire des dispositifs qui mettent en œuvre les propriétés de certains matériaux qui sont à la fois hydrophobes et oléophiles. De tels matériaux sont par exemple décrits dans la demande de brevet français 2 390 553 « Dispositif d'épuration pour récupérer un composé organique dans un milieu aqueux » et leur utilisation est décrite dans le manuel ci-dessus cité qui prévoit un tambour rotatif hydrophobe-oléophile associé à une lame de raclage permettant la récupération des hydrocarbures. On connaît en outre plusieurs réalisations sous forme de disques, bandes sans fin, comme décrites dans les brevets US-A-3 536 199, US-A-3 693 805, US-A-3 992 292 et CA-A-959 423. Ces récupérateurs sont donc plus ou moins sélectifs mais leur utilisation présente plusieurs contraintes qui sont pénalisantes pour une exploitation optimale en continu.

En particulier, il est nécessaire que la nappe d'hydrocarbures soit située à proximité immédiate du rouleau puisque celui-ci ne crée aucun courant superficiel d'attirance.

En outre, il faut qu'elle soit à son contact pendant un temps suffisamment long puisque l'huile se dépose à la surface du tambour sous la forme d'un film d'épaisseur en général très inférieure à celle de la nappe qui flotte à la surface du milieu aqueux. Ainsi l'utilisation d'un tambour pour récupérer les hydrocarbures d'une nappe en mouvement ne peut se faire qu'avec des équipements compliqués, par exemple comportant plusieurs tambours ou un tambour de grandes dimensions et ne fournit pas un bon rendement. De tels équipements trouvent difficilement leur place dans les installations existantes, en particulier les bassins de décantation des raffineries à moins qu'ils ne soient associés à un équipement de raclage mécanique.

Au contraire, la présente invention prévoit un dispositif qui permet une récupération sélective et continue d'une nappe d'hydrocarbures présente à la surface d'un milieu aqueux, ce dispositif étant simple et peu encombrant et permettant en outre d'attirer la nappe vers lui.

Ce dispositif comporte un moyen d'extraction constitué par au moins une paroi continue mise en mouvement par la rotation, autour d'un axe horizontal, d'un moyen d'entraînement, ladite paroi étant constituée, au moins superficiellement, par un matériau oléophile et hydrophobe, et étant agencée de telle sorte que sa partie inférieure puisse être en contact avec les hydrocarbures à récupérer alors que sa partie supérieure est en contact avec un moyen de récupération permettant la récupération des hydrocarbures ayant adhéré sur le moyen d'extraction.

Selon l'invention, ce dispositif comporte un moyen d'attraction de la nappe, permettant d'attirer cette nappe à proximité immédiate de la partie inférieure de la paroi continue et d'y créer une zone d'accumulation des hydrocarbures dans laquelle ceux-ci sont maintenus à un niveau substantiellement constant. Ce dispositif permet non seulement de récupérer les hydrocarbures avec un très bon rendement puisque ceux-ci sont accumulés au niveau du matériau hydrophobe-oléophile mais encore d'attirer la nappe vers cette zone d'accumulation tout en prévenant tout remélange des hydrocarbures avec l'eau.

Par matériau hydrophobe et oléophile on entend tout matériau susceptible d'être mouillé, en présence d'eau par les hydrocarbures présents dans la nappe, alors que l'absence de caractère polaire lui évite d'être mouillé par l'eau. De tels matériaux sont bien connus de l'homme de l'art et peuvent consister par exemple en de l'acier inoxydable, de l'acier noir, de l'aluminium ou une matière plastique.

De préférence, le moyen d'attraction de la nappe est constitué par un récipient qui comporte une première face, plane, parallèle aux génératrices d'un rouleau constituant le moyen d'extraction, et dont le bord supérieur est libre, et une seconde face, reliée à la première par son bord libre. Ces deux faces sont reliées à deux flasques latéraux, parallèles de sorte que l'ensemble définit un volume, ouvert dans sa partie supérieure et enveloppant au moins la partie inférieure du rouleau ; le récipient comporte de plus un moyen de collecte et d'évacuation du milieu aqueux.

Selon une autre caractéristique, le récipient est mobile en rotation autour d'un axe horizontal entre une position haute et une position basse dans laquelle le bord supérieur de la surface plane est immergé d'une profondeur telle que le débit du fluide entrant dans le récipient est égal à la somme des débits d'extraction des hydrocarbures par le rouleau et d'évacuation de l'eau par le moyen d'évacuation.

D'une manière préférentielle, le récipient présente une section latérale dissymétrique par rapport au plan passant par l'axe de rotation, de sorte que les parties du récipient situées de part et d'autre de ce plan ont des volumes différents, le volume avant étant le plus petit.

D'autres caractéristiques et avantages de l'invention apparaîtront à la lecture de la description qui suit, faite d'une manière illustrative et nullement limitative en référence aux dessins annexés sur lesquels :

la figure 1 est une vue en perspective d'un dispositif réalisé selon l'invention,

la figure 2 est une vue de face du dispositif de la figure 1,

la figure 3 est une coupe d'un détail de la figure 2,

la figure 4 est une vue en coupe selon IV-IV de la figure 2,

la figure 5 est une vue en coupe selon V-V de la figure 2,

la figure 6 est une vue partielle, en coupe, d'un second mode de réalisation de l'invention,

la figure 7 est une vue de dessus du dispositif représenté figure 6

la figure 8 représente schématiquement un troisième mode de réalisation de l'invention.

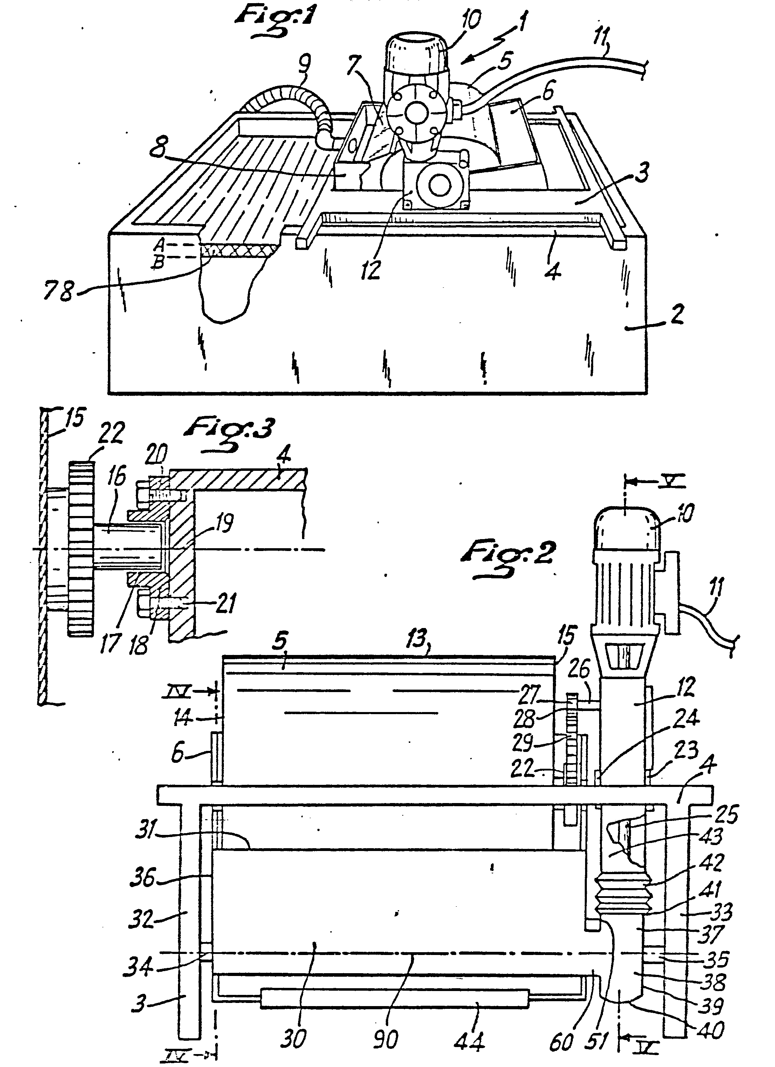

On a représenté sur la figure 1 un dispositif (1) selon l'invention mis en place à une extrémité d'un bassin de décantation (2).

Le dispositif (1) comporte un bâti (3) posé sur les bords (4) du bassin (2), un rouleau (5), un récipient mobile (6), une lame racleuse (7) dont l'extrémité fixe débouche dans une gouttière (8) de récupération à laquelle est connectée une canalisation souple (9) dont l'extrémité libre débouche dans un bassin de stockage d'hydrocarbures (non représenté). Le dispositif comporte en outre un moteur électrique (10) alimenté par le câble (11), et un moto-réducteur (12) fixé sur le bâti (3).

La figure 2 représente le dispositif vu de face. Pour des raisons de clarté, on n'a pas représenté le dispositif de raclage comportant la lame racleuse (7) et la gouttière (8).

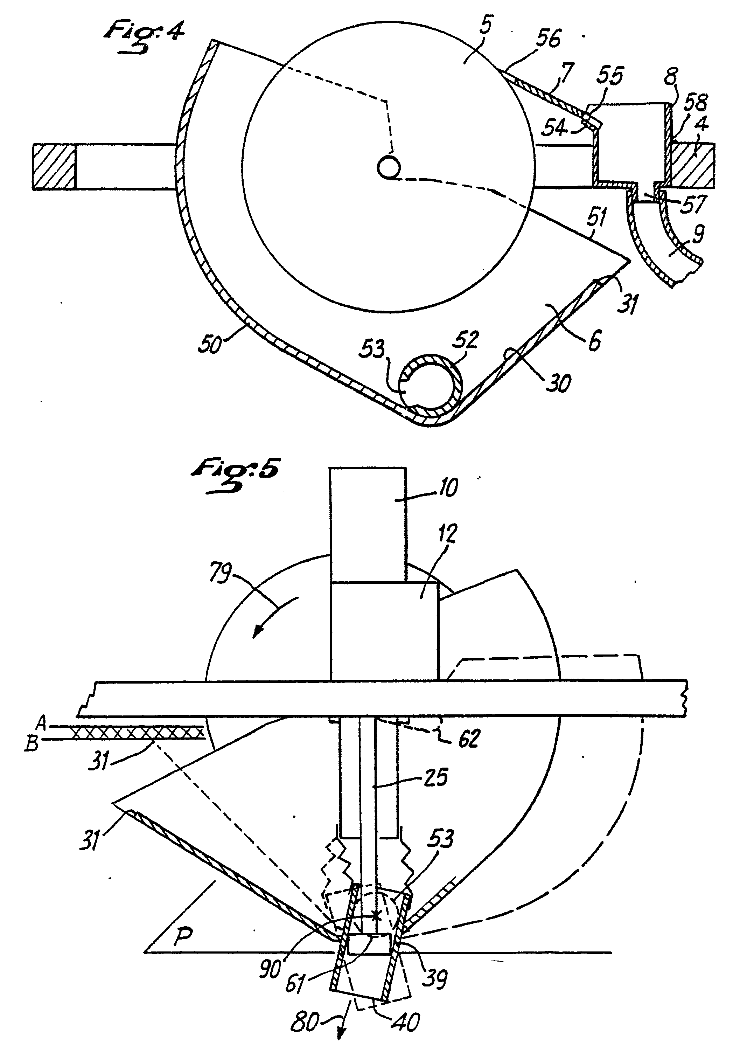

Le rouleau (5) comporte une paroi cylindrique (13) et deux faces latérales (14) et (15). La paroi (15) est munie d'un tourillon (16) (figure 3) engagé dans un alésage (17) pratiqué dans un support (18) vissé à la paroi (19) du bâti (3) par les vis (20) et (21). La paroi (15) comporte aussi une roue dentée (22), concentrique au tourillon (16). La paroi (14) est montée de la même manière mais ne comporte pas de roue dentée. Le moto-réducteur (12) est maintenu en place sur le bâti (3) par l'intermédiaire des deux ergots (23) et (24) auxquels il est vissé. A sa partie supérieure est fixé le moteur électrique (10) qui est un moteur triphasé asynchrone de 0, 75KW. Le moto-réducteur (12) est un moto-réducteur du type vis sans fin-roue, dont la vis est située dans l'axe de l'arbre du moteur et tourne à la même vitesse que lui. Elle est prolongée par l'arbre (25). La roue engraine sur la vis et commande l'arbre (26) dont l'extrémité (27) comporte un pignon (28), relié à la roue dentée (22) par une chaîne sans fin (29). Le récipient mobile est constitué par une paroi frontale (30) et située à un niveau inférieur à celui du bâti (4). Il est relié aux montants (32) et (33) du bâti par deux axes (34) et (35).

L'axe (34) est porté par la paroi latérale (36) du récipient (6) alors que l'axe (35) est porté par la paroi (37) de la goulotte d'évacuation (38) qui est constituée par un tube (39) ouvert à sa partie inférieure (40) et dont l'extrémité supérieure (41) est reliée par un soufflet (42) à un carter (43) entourant l'arbre (25) et fixé au bâti (4). Le tube (39) est relié à la paroi (51) par un carter cylindrique (60). Le récipient (6) comporte un système de contrepoids (44).

La figure 4 qui est une vue en coupe du dispositif, représente d'une part, le rouleau (5) le récipient mobile (6) constitué par la paroi frontale (30) qui est plane et prolongée par la paroi arrière (50). Les deux parois sont soudées à la paroi latérale (51). Le bord supérieur (31) est à un niveau inférieur à celui du bord supérieur du flasque (51). Le moyen d'évacuation est constitué par un tube (52), soudé à la partie inférieure du récipient et muni d'une ouverture longitudinale (53), débouchant dans le carter cylindrique (60).

La lame racleuse (7) est fixée sur le bord (54) de la gouttière (8) par l'intermédiaire d'une charnière (55) et elle est prolongée par une lame (56) biseautée en matériau polymère résistant aux hydrocarbures. La gouttière est percée d'un alésage (57) débouchant dans le tuyau souple (9). Elle est reliée au bâti (4) par un cordon de soudure (58).

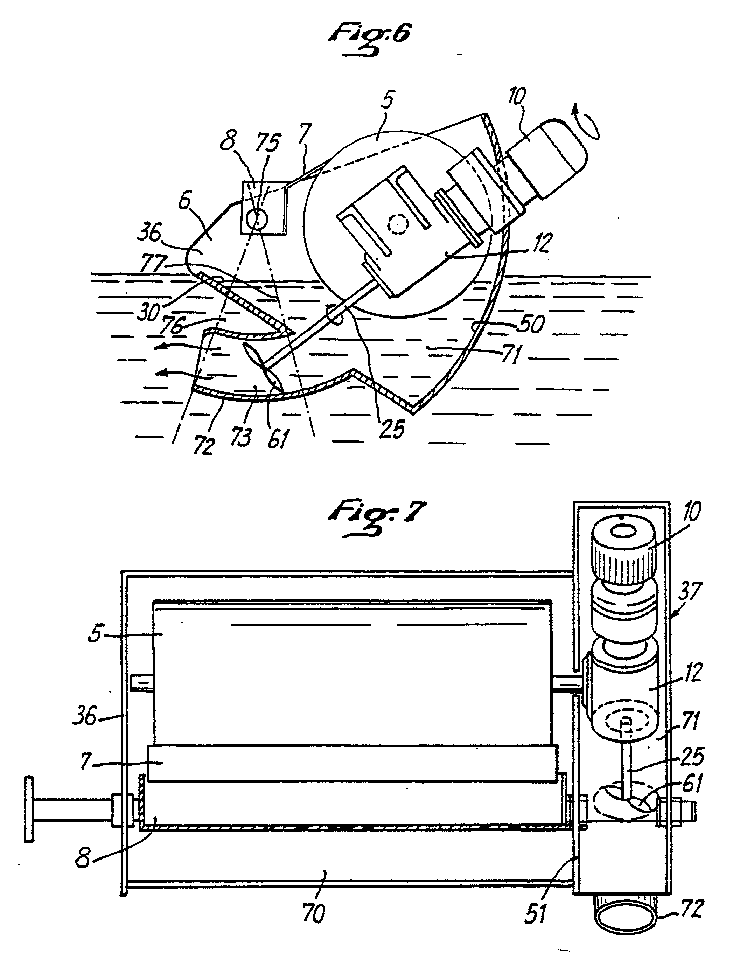

Sur la figure 5, qui est une coupe selon l'axe VV de la figure 2, on a représenté le récipient mobile dans ses deux positions extrêmes. Le tube (39) présente une section telle que l'hélice (61), représentée schématiquement par un rectangle, puisse tourner quelle que soit l'orientation du tube, ce qui est rendu possible par le fait que le plan P dans lequel tourne l'hélice contient l'axe de rotation du récipient (6). La section du récipient (6) telle que définie par la paroi frontale (30) et la paroi arrière (50) est dissymétrique par rapport au plan vertical passant par l'axe (90) de rotation du récipient (6) et ainsi qu'on peut le remarquer sur cette figure 5, la partie du récipient située du côté du bord (31) de la paroi frontale (30) a un volume nettement inférieur à celui de la partie située de l'autre côté du plan.

La partie inférieure de chacun des flasques (51) et (36) présente une échancrure (62) permettant le passage des tourillons (16), (17) quand le récipient (5) est en position basse.

Les figures 6 et 7 représentent schématiquement une variante de réalisation du dispositif selon l'invention. Sur ces figures, les parties identiques à celles des figures 1 à 5 sont indiquées par les mêmes repères.

Le récipient (6) comporte des flasques (51), (36) et (37), une paroi avant (30), une paroi arrière (50) qui définissent deux enceintes. L'enceinte (70) enveloppe le rouleau (5) alors que l'enceinte (71) constitue un carter pour l'ensemble constitué par le moteur (10) le moto-réducteur (12), l'arbre (25) et l'hélice (61). Le flasque (51) séparant les deux enceintes comporte à sa partie inférieure une ouverture mettant en communication les deux enceintes. L'enceinte (71) comporte un conduit (72), de diamètre légèrement supérieur à celui de l'hélice. Ce conduit comporte une zone (73) ayant la forme d'une section d'un tore dont l'axe de symétrie est confondu avec l'axe d'articulation (75) du récipient (6). Cet axe (75) est situé au niveau de la goulotte (8) de récupération ; La zone (73) est comprise entre les deux axes concourants (76) et (77).

Le fonctionnement du dispositif représenté sur la figure 1 est expliqué comme suite en référence en particulier aux figures 1 et 5.

Le bac (2) est rempli d'eau (77) sur laquelle flotte une nappe (78) d'huile. Le niveau supérieur de la nappe d'huile est représenté par le repère A alors que B représente le niveau inférieur. Quand le dispositif est à l'arrêt, c'est-à-dire que le moteur (10) n'est pas alimenté, la goulotte a la position représentée sur la figure en traits pointillés.

Quand on met en route le moteur (10), il tourne dans le sens représenté par la flèche (80) et l'hélice (61) évacue l'eau dans la direction de la flèche (61). Le rouleau (5) évacue un débit d'huile dh, la turbine un débit d'eau d.e. Suivant l'inclinaison du récipient et donc la profondeur d'immersion du bord supérieur (31) de la paroi frontale (30) il est introduit dans le récipient (6) un débit d'huile et d'eau, d.i.

Du fait de la dissymétrie des parties du récipient (5) qui sont de part et d'autre du plan perpendiculaire passant par l'axe de rotation (90), le récipient va prendre une inclinaison selon laquelle le débit d.i. sera égal à la somme dh + d.e.

Le débit d.e. est choisi sensiblement supérieur au débit dh de sorte que l'on a une accumulation d'hydrocarbures à l'intérieur du récipient.

On comprend donc aisément que ce dispositif permet une récupération sélective des hydrocarbures par l'utilisation du tambour et qu'il permet en outre d'attirer les hydrocarbures à proximité de ce tambour sans créer de zone de turbulence ou de déplacement de la nappe ce qui autorise un temps de contact long entre la nappe et le tambour.

En outre, ce dispositif ne crée aucun remélange ou émulsion des hydrocarbures dans l'eau.

Il est évident que par action sur les contrepoids (44), sur les vitesses respectives du tambour (5) et, de l'hélice (61) on peut faire varier l'inclinaison du récipient en fonction des caractéristiques des hydrocarbures à récupérer et de l'épaisseur de la nappe. Cependant, on règlera ces différents paramètres de façon à éviter que les hydrocarbures contenus à l'intérieur du récipient ne viennent en contact avec l'hélice et ne soient propulsés vers l'extérieur, ce qui pourrait créer des émulsions et nécessiter une opération de décantation. A cet effet, on peut prévoir de manière classique un détecteur situé à proximité de la goulotte (52) permettant de détecter la présence d'hydrocarbures et actionnant une vanne obturant l'orifice (40) dès détection d'hydrocarbure. Ce détecteur peut agir aussi sur un dispositif permettant le débrayage de l'arbre (25).

Le dispositif représenté par les figures 6 et 7 fonctionne exactement de la même manière. Sur la figure 6, on voit que la forme du conduit (72) dirige l'eau évacuée dans une direction sensiblement parallèle à la nappe d'hydrocarbures et dans un sens opposé au sens de déplacement, ce qui facilite le déplacement de cette nappe vers l'intérieur de l'enceinte, du fait de la réflexion du courant d'eau sur la paroi du bassin. On a utilisé le dispositif représenté figure 1 pour le déshuilage d'un bassin de décantation rectangulaire de 2 mètres de large sur 10 mètres de long contenant une nappe d'hydrocarbures de 1 cm d'épaisseur. Les hydrocarbures avaient une viscosité de 0, 06 $\times 10^{-4}$ m2/s.. On a utilisé un tambour de 1 m de longueur que l'on a fait tourner à 30 tours par minute. Pour cela, le moteur (10) était un moteur triphasé asynchrone de 0,75KW et 1 400 tr/mn. Le moto-réducteur roue et vis donnait une vitesse de rotation pour la roue égale à 99 tr/mn. Le rapport entre le pignon (27) et la roue (22) était de 1/3 de sorte que le tambour tournait à 30 tours par minute. On a pratiquement déshuilé le bassin en environ 10 mn, ce qui représente un volume d'huile évacué de l'ordre de 200 litres.

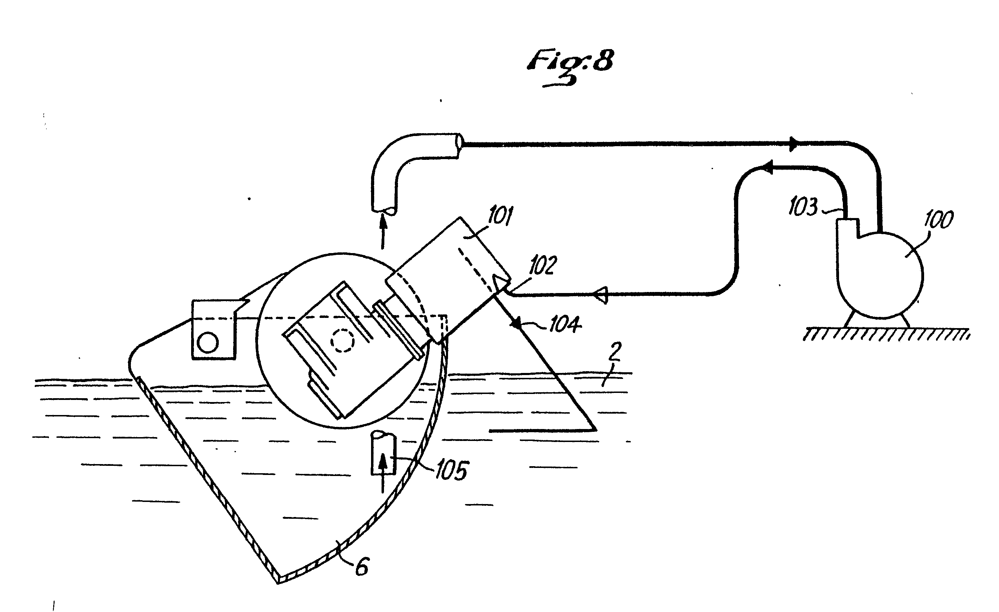

La figure 8 représente un troisième mode de réalisation selon lequel l'entraînement du moteur et l'évacuation de l'eau se fait par un système hydraulique comportant une pompe (100), un moteur hydraulique (101) dont l'aspiration (102) est reliée au refoulement (103) de la pompe et dont l'évacuation (104) débouche à l'intérieur du bassin (2) en aval du rouleau. L'aspiration (105) de la pompe est placée dans la partie basse du récipient (6).

Ce dispositif fonctionne exactement comme les deux autres et il est intéressant à utiliser dans les atmosphères où il y a des risques de déflagration et où les moteurs électriques ne peuvent être utilisés.

Le dispositif selon l'invention présente en outre l'avantage d'être très facilement automatisable. On peut par exemple asservir l'inclinaison du récipient (6) à la nature et à l'épaisseur de la nappe d'hydrocarbure de même que cet asservissement peut concerner la vitesse d'entraînement du tambour, celle de l'hélice et/ou le rapport entre ces deux vitesses.

L'invention n'est pas limitée aux modes de réalisations décrits. Elle englobe au contraire toutes les variantes. En particulier, on peut imaginer toute forme pour le récipient (6), par exemple on peut prévoir des flasques rectangulaires sur lesquels seraient soudées les parois. On peut aussi prévoir tout matériau oléophile hydrophobe pour le tambour, que ce matériau soit présent en tant que constituant de la paroi (13) dudit tambour ou en tant que revêtement de surface de ladite paroi.

## Revendications

1. Dispositif pour la récupération sélective et continue des hydrocarbures présents sous forme de nappe à la surface d'un milieu liquide comprenant un moyen d'extraction constitué par un rouleau horizontal (5) mis en mouvement par la rotation, autour d'un axe horizontal, d'un moyen d'entraînement, ladite paroi étant constituée, au moins superficiellement, par un matériau oléophile et hydrophobe, et étant agencée de telle sorte que sa partie inférieure puisse être en contact avec les hydrocarbures à récupérer alors que sa partie supérieure est en contact avec un moyen de récupération permettant la récupération des hydrocarbures ayant adhéré sur le matériau hydrophobe et oléophile, ledit dispositif comportant en outre un moyen d'attraction de la nappe d'hydrocarbures pour attirer ladite nappe à proximité immédiate de la partie inférieure de ladite paroi continue et pour y créer une zone d'accumulation des hydrocarbures dans laquelle ceux-ci sont maintenus à un niveau substantiellement constant, ledit moyen d'attraction comportant un moyen de collecte et d'évacuation du milieu liquide et étant essentiellement constitué par un récipient (6) comportant une face plane (30), d'axe parallèle aux génératrices dudit rouleau, dont le bord supérieur (31) est libre et dont le bord inférieur est relié à une seconde face (50), ces deux faces étant associées à deux flasques parallèles (51, 36), l'ensemble définissant un volume ouvert dans sa partie supérieure et enveloppant au moins la partie inférieure dudit rouleau, ledit moyen de collecte et d'évacuation du milieu liquide étant situé dans la zone la plus inférieure dudit récipient, ledit récipient étant mobile en rotation autour d'un axe horizontal, entre une position haute (37) et une position basse dans laquelle le bord supérieur (31) de ladite surface est immergé dans le fluide.

2. Dispositif selon la revendication 1, caractérisé en ce que les faces opposées du rouleau comportent des tourillons (16) engagés dans deux paliers portés par un bâti.

3. Dispositif selon la revendication 2, caractérisé en ce que, en position basse, ledit récipient est immergé dans le fluide d'une profondeur telle que le débit de fluide entrant dans le récipient est égal à la somme des débits d'extraction par le rouleau et d'évacuation par le moyen d'évacuation du fluide.

4. Dispositif selon la revendication 3, caractérisé en ce que le moyen d'évacuation est constitué par un tube ouvert (52) sur une partie de sa longueur, fixé dans la partie inférieure du récipient (6) et dont une extrémité est reliée à une goulotte d'évacuation (38) comprenant une hélice (61) permettant de propulser le milieu aqueux vers l'extérieur du récipient.

5. Dispositif selon la revendication 4, caractérisé en ce que l'axe horizontal autour duquel est articulé le récipient (6) est situé à proximité immédiate du plan de rotation de l'hélice (61).

6. Dispositif selon la revendication 4, caractérisé en ce que l'axe horizontal autour duquel est articulé le récipient est situé au-dessus du plan de rotation de l'hélice et que la goulotte dans laquelle tourne l'hélice a la forme d'une section d'un tore dont l'axe de symétrie est confondu avec l'axe de rotation du récipient (6).

7. Dispositif selon la revendication 4, caractérisé en ce qu'il comporte un moteur électrique (10) dont l'arbre de sortie est accouplé à un moto-réducteur (12) à double sortie, dont une des sorties est reliée à un arbre (25) et commande de l'hélice (61) d'évacuation alors que l'autre sortie entraîne en rotation le tambour par l'intermédiaire de deux pignons (28-22) portés respectivement par l'axe et par le tambour engrainant sur une chaîne sans fin (29).

8. Dispositif selon la revendication 2, caractérisé en ce que le moyen d'extraction et d'évacuation du milieu liquide est constitué par une pompe (100) située à l'extérieur dudit récipient (103) et comportant un conduit d'aspiration débouchant dans la partie inférieure dudit récipient (6) et ledit conduit de refoulement constituant l'alimentation d'un moteur hydraulique (101) entraînant en rotation le rouleau horizontal.

9. Dispositif selon la revendication 8, caractérisé en ce que le conduit de refoulement (105) du moteur hydraulique débouche à l'extérieur du récipient dans ledit milieu liquide.

10. Dispositif selon l'une des revendications 4, 5, 9 mis en place à une extrémité d'un bac rectangulaire, caractérisé en ce que le moyen de collecte et d'évacuation comporte un déflecteur (72) orientant le fluide évacué vers l'autre extrémité du bac de sorte à créer un courant favorisant l'action du moyen d'attraction de la nappe.

## Claims

1. Apparatus for the selective and continuous recovery of hydrocarbons present in the form of a sheet on the surface of a liquid medium comprising extraction means constituted by a horizontal roller (5) set in movement by the rotation, about a horizontal axis, of entrainment means, the said wall being constituted, at least superficially, by an oleophilic and hydrophobic material and being arranged so that its lower part may be in contact with the hydrocarbons to be recovered whereas its upper part is in contact with recovery means allowing the recovery of the hydrocarbons which have adhered to the hydrophobic and oleophilic material, the said apparatus also comprising means for the attraction of the sheet of hydrocarbons in order to attract the said sheets into the immediate vicinity of the lower part of the said continuous wall and in order to create there an area for the accumulation of the hydrocarbons in which the latter are kept at a substantially constant level, the said attraction means comprising means for collecting and discharging the liquid medium and being essentially constituted by a vessel (6) comprising a flat face (30), the axis of which is parallel to the generatrices of the said roller, whereof the upper edge (31) is free and whereof the lower edge is connected to a second face (50), these two faces being associated with two parallel cheeks (51, 36), the arrangement defining a volume open in its upper part and surrounding at least the lower part of the said roller, the said means for collecting and discharging the liquid medium being situated in the lower region of the said vessel, the said vessel being able to rotate about a horizontal axis, between an upper position (37) and a lower position in which the upper edge (31) of the said surface is immersed in the fluid.

2. Apparatus according to Claim 1, characterised in that the opposite sides of the roller comprise journals (16) engaged in two bearings supported by a frame.

3. Apparatus according to Claim 2, characterised in that, in the lower position, the said vessel is immersed in the fluid to a depth such that the amount of fluid entering the vessel is equal to the sum of the amounts extracted by the roller and discharged by the means for the discharge of fluid.

4. Apparatus according to Claim 3, characterised in that the discharge means is constituted by a tube (52) open over part of its length, fixed in the lower part of the vessel (6) and whereof one end is connected to a discharge spout (38) comprising a propeller (61) making it possible to propel the aqueous medium towards the outside of the vessel.

5. Apparatus according to Claim 4, characterised in that the horizontal axis about which the vessel (6) is pivoted, is situated in the immediate vicinity of the plane of rotation of the propeller (61).

6. Apparatus according to Claim 4, characterised in that the horizontal axis about which the vessel is pivoted is situated above the plane of rotation of the propeller and that the spout in which the propeller rotates is in the shape of a section of a torus whereof the axis of symmetry coincides with the axis of rotation of the vessel (6).

7. Apparatus according to Claim 4, characterised in that it comprises an electric motor (10) whereof the output shaft is connected to a speed-reducer unit (12) comprising a double output, whereof one of the outputs is connected to a shaft (25) and controls the discharge propeller (61), whereas the other output sets the drum in rotation through the intermediary of two pinions (28-22) respectively supported by the shaft and by the drum meshing with an endless chain (29).

8. Apparatus according to Claim 2, characterised in that the means for the extraction and discharge of the liquid medium is constituted by a pump (100) situated outside the said vessel (103) and comprising a suction pipe opening into the lower part of the said vessel (6) and the said delivery pipe constituting the supply for a hydraulic motor (101) setting the horizontal roller in rotation.

9. Apparatus according to Claim 8, characterised in that the delivery pipe (105) of the hydraulic motor opens into the said liquid medium outside the vessel.

10. Apparatus according to one of Claims 4, 5, 9 fitted at one end of a rectangular tank, characterised in that the collecting and discharge means comprise a deflector (72) directing the discharged fluid towards the other end of the tank in order to create a current promoting the action of the means for the attraction of the sheet.

**Patentansprüche**

1. Vorrichtung zur selektiven und kontinuierlichen Rückgewinnung von Kohlenwasserstoffen, welche eine Schicht auf der Oberfläche eines flüssigen Mediums bilden, enthaltend ein Abnehmemittel, das durch eine durch die Drehung eines Antriebsmittels um eine horizontale Achse in Bewegung gesetzte horizontale Walze (5) gebildet ist, wobei die Wand zumindest oberflächlich aus einem ölaufsaugenden und wasserabweisenden Material gebildet ist und auf solche Weise eingerichtet ist, daß ihr unterer Teil mit den wiederzugewinnenden Kohlenwasserstoffen in Kontakt sein kann, wenn ihr oberer Teil in Kontakt mit einem Wiedergewinnungsmittel ist, das die Wiedergewinnung der Kohlenwasserstoffe gestattet, die an dem wasserabweisenden und ölaufsaugenden Material haften geblieben sind, wobei die Vorrichtung außerdem ein Anziehungsmittel der Schicht von Kohlenwasserstoffen aufweist, um die Schicht in unmittelbarer Nähe des unteren Teils der kontinuierlichen Wand anzuziehen und um dort eine Sammelzone der Kohlenwasserstoffe zu schaffen, in der diese in einem im wesentlichen konstanten Niveau gehalten sind, wobei das Anziehungsmittel ein Mittel zum Sammeln und zum Abführen des flüssigen Mediums umfaßt und im wesentlichen durch einen Behälter (6) gebildet ist, der eine ebene Seite (30) mit zu den Mantellinien der Walze paralleler Achse umfaßt, deren oberer Rand (31) frei ist und deren unterer Rand mit einer zweiten Seite (50) verbunden ist, wobei diese beiden Seiten zwei parallelen Flanschen (51, 36) zugeordnet sind, wobei die Konstruktion ein Volumen umgrenzt, das in seinem oberen Teil offen ist und zumindest den unteren Teil der Walze umhüllt, wobei das Mittel zum Sammeln und Abführen des flüssigen Mediums in der untersten Zone des Behälters liegt, wobei der Behälter um eine horizontale Achse zwischen einer hohen Position (37) und einer tiefen Position drehbeweglich ist, in der der obere Rand (31) der Fläche in das Fluid eingetaucht ist.

2. Vorrichtung nach Anspruch 1, dadurch gekennzeichnet, daß die gegenüberliegenden Enden der Walze Zapfen (16) tragen, die in zwei durch einen Rahmen getragenen Lagern eingesteckt sind.

3. Vorrichtung nach Anspruch 2, dadurch gekennzeichnet, daß der Behälter bei tiefer Position in das Fluid mit einer solchen Tiefe eingetaucht ist, daß der Durchsatz des in den Behälter eintretenden Fluids gleich der Summe der Durchsätze der Abnahme durch die Walze und der Abführung durch das Mittel zur Abführung des Fluids ist.

4. Vorrichtung nach Anspruch 3, dadurch gekennzeichnet, daß das Mittel zur Abführung durch ein auf einem Teil seiner Länge offenes Rohr (52) gebildet ist, das in dem unteren Teil des Behälters (6) befestigt ist und dessen eines Ende mit einem Ablauf (38) zur Abführung verbunden ist, der ein Schraubenrad (61) umfaßt, daß das Vortreiben des wässrigen Mediums zur Außenseite des Behälters gestattet.

5. Vorrichtung nach Anspruch 4, dadurch gekennzeichnet, daß die horizontale Achse, um die der Behälter (6) gelenkig angebracht ist, in unmittelbarer Nähe der Rotationsebene des Schraubenrads (61) liegt.

6. Vorrichtung nach Anspruch 4, dadurch gekennzeichnet, daß die horizontale Achse, um die der Behälter gelenkig angebracht ist, oberhalb der Rotationsebene des Schraubenrads liegt und daß der Ablauf, in dem sich das Schraubenrad dreht, die Form eines Torusschnitts hat, dessen Symmetrieachse mit der Rotationsachse des Behälters (6) verschmolzen ist.

7. Vorrichtung nach Anspruch 4, dadurch gekennzeichnet, daß sie einen Elektromotor (10) umfaßt, dessen Ausgangswelle an einen Getriebemotor (12) mit doppeltem Ausgang angeschlossen ist, dessen einer Ausgang mit einer Welle (25) und Steuerung des Schraubenrads (61) sur Abführung verbunden ist, während der andere Ausgang bei Rotation die Trommel mittels Ritzeln (28-22) antreibt, die jeweils durch die Achse und durch die Trommel getragen sind, wobei sie mit einer Endloskette (29) in Eingriff stehen.

8. Vorrichtung nach Anspruch 2, dadurch gekennzeichnet, daß das Mittel zum Abnehmen und zur Abführung des flüssigen Mediums durch eine Pumpe (100) gebildet ist, die auf der Außenseite des Behälters (103) liegt und einen in den unteren Teil des Behälters (6) mündenden Ansaugkanal umfaßt, und wobei der Förderkanal die Zuführung eines Hydromotors (101) bildet, der bei Rotation die horizontale Walze antreibt.

9. Vorrichtung nach Anspruch 8, dadurch gekennzeichnet, daß der Förderkanal (105) des Hydromotors auf der Außenseite des Behälters in das flüssige Medium mündet.

10. Vorrichtung nach einem der Ansprüche 4, 5, 9, angeordnet an einem Ende eines rechteckförmigen Behälters, dadurch gekennzeichnet, daß das Mittel zum Sammeln und Abführen ein Leitwerk (72) umfaßt, daß das abgeführte Fluid zum anderen Ende des Behälters derart orientiert, daß eine die Wirkung des Mittels zum Anziehen der Schicht begünstigende Strömung schafft.

0 097 082

Fig.1

Fig.3

Fig.2

Fig.4

Fig.5

*Fig.6*

*Fig.7*

Fig.8

0 097 082